# EUROPÄISCHE PATENTSCHRIFT

(11) **EP 1 217 721 B1**
(45) Veröffentlichungstag und Bekanntmachung des Hinweises auf die Patenterteilung: **02.06.2010**
(21) Anmeldenummer: 01129160.6
(22) Anmeldetag: 08.12.2001
(51) Int. Cl.: H02P 1/44

(54) **Kondensatornetzteil mit Starteinrichtung**
Capacitor supply unit with start device
Alimentation à condensateur avec dispositif de démarrage

(30) Priorität: 19.12.2000 DE 10063407
(43) Veröffentlichungstag der Anmeldung: 26.06.2002
(73) Patentinhaber: WILO SE, 44263 Dortmund (DE)
(72) Erfinder: Wolff, Christian, 44149 Dortmund (DE)
(74) Vertreter: COHAUSZ DAWIDOWICZ HANNIG & SOZIEN

(56) Entgegenhaltungen:
- DE-A- 3 206 187
- DE-A- 4 337 614
- DE-C- 4 215 266
- GB-A- 2 292 645

## Beschreibung

Die vorliegende Erfindung betrifft einen Elektromotor, insbesondere einen Asynchronmotor, mit einer Hauptwicklung und mit einer Hilfswicklung, die über Stromschalter, insbesondere über TRIAC's, ganz oder teilweise in Serie zur Hauptwicklung schaltbar ist, wobei zwischen zwei Netzleitungen N und L eine Versorgungsspannung als Wechselspannung anliegt und wobei ein Stromschalter mit seinem Steueranschluß (Gate) über eine Steuerleitung auf das Potential eines ersten Bezugspunktes gelegt ist.

Elektromotoren mit einem derartig ausgelegten Netzteil sind hinlänglich bekannt. Mit der Hauptwicklung und der meist zweiteiligen Hilfswicklung haben diese Motoren zwei Wicklungen, wobei die Hilfswicklung mit einem Motorkondensator in Reihe geschaltet ist. Während die zweiteilige Hilfswicklung mit dem Kondensator ständig an der Netzspannung liegt, kann die Hauptwicklung wahlweise mit den drei Anschlüssen der Hilfswicklung verbunden werden. Damit können drei unterschiedliche Leistungsstufen realisiert werden. Die Umschaltung geschieht durch die elektronische Wechselstromschalter (TRIACs). Um einen solchen TRIAC einzuschalten muß ein positiver oder negativer Strom relativ zu seinem Hauptanschluß A1 durch den Gate-Anschluß fließen.

Eine einfache Möglichkeit diesen Strom hervorzurufen besteht darin, die für die TRIACs eingesetzte Steuerelektronik mit einem (positiven) Bezugspunkt mit den drei A1 Hauptanschlüssen zu verbinden. Gleichgültig welcher der TRIACs eingeschaltet wird, befinden sich TRIAC und Steuerung immer auf demselben Potentialniveau. Relativ zu diesem Potentialniveau muß nun noch eine (negative) Versorgungsspannung von beispielsweise 5 Volt für die Steuerung bereitgestellt werden.

Die Versorgungsenergie wird bekanntermaßen nur aus einer der Netzzuleitungen N oder L entnommen, wobei ein Kondensator als kapazitiver Widerstand und ein Sicherungswiderstand als Ladestrombegrenzung und Kurzschlußsicherung einen Vorwiderstand bilden, der den Versorgungsstrom derart begrenzt, daß mit einer Z-Diode und einer zusätzlichen Regelelektronik die gewünschte Niederspannung von 5 Volt erzeugt werden kann. Allerdings befindet sich der Bezugspunkt A1 je nach eingeschaltetem TRIAC auf einem unterschiedlichem Potential relativ zu L und N. Dies führt zu dem Problem, daß falls insbesondere beim Einschalten kein TRIAC durchgeschaltet ist der Bezugspunkt über die Hauptwicklung auf dem Potential von L liegt. In diesem Fall kann relativ zu L keine Spannung aus diesem Anschluß L bezogen werden. Der Motor kann nicht starten und solange er nicht startet bleibt der Bezugspunkt auf L.

Zur Lösung dieser Problematik sind verschiedene Ansätze bekannt. So ist es möglich, über einen Netztransformator eine Niederspannung ohne jeglichen Potentialbezug zur Schaltung zur Verfügung zu stellen. Diese Spannung kann mit einem Punkt auf den allgemeinen Bezugspunkt gelegt werden und steht damit zur Verfügung. Diese Lösung ist wegen der zusätzlichen Kosten und des großen Platzbedarfes nachteilig. Es ist auch bekannt, die Startenergie über einen zweiten Kondensator /Widerstandszweig von der anderen Netzleitung N heranzuführen. Die beiden gleichartigen Zweige werden dann durch Dioden oder einen Brückengleichrichter verknüpft. Dabei wird der zweite Zweig gelegentlich schwächer ausgeführt, da im Anlaufmoment nicht das optimale Betriebsverhalten verlangt werden muß. Wie die vorher genannte Lösung, die sich des zusätzlichen Transformators bedient, ist auch diese wegen der zusätzlichen Kosten und vor allem wegen des großen Platzbedarfes des zusätzlichen Kondensators nachteilig.

Die deutsche Offenlegungsschrift 32 06 187 A1 offenbart eine Anlassvorrichtung für einen einphasigen Asynchonmotor mit einer Hauptwicklung und einer etwa 90° im Verhältnis dazu versetzten Hilfwicklung, die in Reihe mit einem Kondensator und einer Kontakteinrichtung geschaltet ist. Über einen Triac kann die Hilfswicklung teilweise oder ganz in Serie zur Hauptwicklung geschaltet werden. Der Steueranschluss (Gate) des Triacs ist über eine Steuerleitung auf einen ersten Bezugspunkt gelegt. Die Steuerleitung umfasst dabei einen Strompfad über zwei Widerstände und zwei Bipolartransistoren sowie eine Diode, wobei der erste Teil der Steuerleitung den Steueranschluss des entsprechenden Triacs über einen ohmschen Widerstand und einen pnp-Transistor mit einem zweiten Bezugspunkt verbindet. Zwischen dem ersten und dem zweiten Bezugspunkt liegt ein Spannungsabfalls über dem zweiten Widerstand, der Emitter-Kollektor-Strecke des zweiten Bipolartransistors und der Diode vor. Eine Steuereinrichtung mit einer Anordnung von NAND-Gattern steuert hierbei den pnp-Transistor und schaltet den Triac derart, dass ein Teil der Hilfwicklung in Serie mit der Hauptwicklung gelegt ist.

Aufgabe der Erfindung ist es, einen Elektromotor zu schaffen, dessen elektronische Steuerung bei niedrigen Herstellungskosten und geringem Platzbedarf zu einer zuverlässigen Funktion des Motors beiträgt.

Diese Aufgabe wird durch den Elektromotor nach Anspruch 1 gelöst. Bevorzugte Ausführungsformen sind in dem abhängigen Ansprüchen definiert.

Der grundlegende Gedanke der Erfindung liegt darin, wie in der bekannten Lösung einen zweiten Zweig über eine Starterleitung auf das Potential der anderen Netzleitung respektive auf ein zwischen beiden Netzleitungen liegendes Potential zu legen, diese Starterleitung aber statt mit einem Kondensator "nur" mit einem geeigneten Widerstand zu versehen und auf den Kondensator zu verzichten. Dabei wird in Kauf genommen, daß über diese Starterleitung Leistung verbraucht wird. Die Starterleitung mit überwiegend ohmschen, also mit einem zu vernachlässigenden kapazitiven und induktiven Widerstand, verbindet das Gate zusätzlich zum ersten mit einem zweiten Bezugspunkt, wobei zwischen dem ersten und dem zweiten Bezugspunkt ein Potentialunterschied besteht. Das Gate kann damit in keinem Fall auf demselben Potential wie der Hauptanschluß liegen. Durch die Erfindung ist also sichergestellt, daß das Gate über die Starterleitung immer einen Potentialunterschied zum Hauptanschluß aufweist, so daß sich kein stromloser Zustand einstellen kann.

Mit dieser Einrichtung ist es möglich, den Motor in jeder Leistungsstufe zu starten, da jederzeit eine Potentialdifferenz zwischen Gate und A1 zur Verfügung steht. Diese Lösung ist wegen des Verzichts auf den zweiten Kondensator entscheidend kostengünstiger und bedarf eines wesentlich kleineren Einbauraumes. Dieses einfache und preiswerte Kondensatornetzteil wird erfindungsgemäß mit einem zweiten Zweig zum N-Leiter ergänzt, wobei, wie dargelegt, ein "gewöhnlicher" Startwiderstand benutzt wird und dieser direkt mit dem Versorgungsanschluß der Steuerung verbunden wird.

Ein weiterer wesentlicher Gesichtspunkt der Erfindung liegt darin, die über den Startwiderstand abgegebene Verlustleistung auf ein Minimum zu reduzieren. Dies wird einerseits dadurch erreicht, daß die Starterleitung nicht auf das Potential mit maximal möglicher Potentialdifferenz zum ersten Bezugspunkt sondern auf ein niedrigeres Potential gelegt wird. Der zweite Bezugspunkt liegt damit auf einem Potential, das zu jeder der Netzleitungen N und L einen Potentialunterschied aufweist. Als Abgriff wird dabei vorteilhafterweise ein Punkt innerhalb einer die Spannung teilenden Baugruppe der Schaltung gewählt. Dies ist insbesondere zwischen zwei Teilen der Hilfswicklung der Fall. Der zweite Bezugspunkt wird damit auf einem Potential gelegt, das zu beiden Netzleitungen N und L einen Potentialunterschied aufweist. Die Einspeisung erfolgt somit nicht wie bislang über den N-Leiter sondern über die Mittelanzapfung der Hilfswicklung. Dieser Anschluß weist eine geringere Spannung gegenüber dem Bezugspunkt auf als N. Dadurch kann die Verlustleistung reduziert werden.

Eine weitere Möglichkeit zur Reduzierung der Verlustleistung besteht darin, in der Starterleitung eine Gleichrichterdiode vorzusehen. Der Startwiderstand erhält diese Starterdiode in Reihenschaltung. Sie verhindert, daß während der nicht benötigten (positiven) Halbwelle unnötigerweise Strom durch den Startwiderstand und die Spannungsbegrenzung fließt. Durch diese Maßnahme sinkt die Verlustleistung im Startwiderstand auf 25% des Wertes, der sich ohne die Starterdiode eingestellt hätte.

Besonders vorteilhaft läßt sich der erfindungsgemäße Motor zum Antrieb von Kreiselpumpen, insbesondere von Spalttopfpumpen, einsetzten.

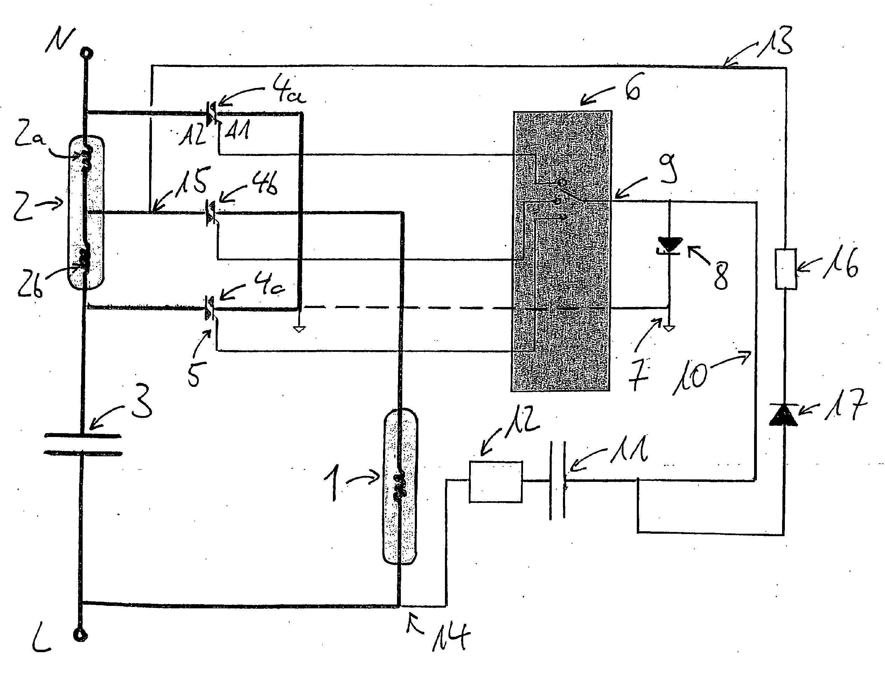

Eine besondere Ausführungsform der Erfindung ist in der Figur dargestellt und wird im folgenden näher beschrieben.

In der Figur ist die Schaltung eines Asynchronmotors mit einer Hauptwicklung 1 und einer Hilfswicklung 2 gezeigt. In dem Schaltbild stellen die dickeren Linien den Zweig der Versorgungsspannung dar, die an den Netzleitungen N und L anliegt. Die Hilfswicklung 2 hat zwei Wicklungsteile 2a und 2b und ist mit einem Motorkondensator 3 zwischen den Potentialen N und L in Serie geschaltet. Über drei Wechselstromschalter (TRIAC's) 4a, 4b und 4c ist die Hilfswicklung 2 ganz oder teilweise in Serie zur Hauptwicklung 1 schaltbar. Die TRIAC's 4 werden über ihren jeweiligen Steueranschluß (Gate) 5 betätigt. Bei durchgeschaltetem TRIAC 4 ist eine Verbindung zwischen den Hauptanschlüssen A1 und A2 des jeweiligen TRIAC hergestellt. Im vorliegenden Ausführungsbeispiel können durch Schalten der TRIACs drei Leistungsstufen realisiert werden.

Die TRIACs 4 werden vermittels einer Steuerschaltung 6 angesteuert, in der ein Schalter realisiert ist. Zur Schaltung der TRIACs muß zwischen deren Gate 5 und dem jeweiligen Hauptanschluß A1 eine Spannung angelegt werden. Dabei liegt der Hauptanschluß A1 zusammen mit einem Bezugspunkt der Steuerschaltung 6, der in diesem Fall + darstellt, auf einem gemeinsamen Bezugspotential 7 (unterbrochene Linie). Eine Z-Diode 8 bildet dabei eine Spannungsbregrenzung bezüglich dem Versorgungseingang 9 (-) der Steuerschaltung 6. Der Versorgungseingang 9 wird über eine Steuerleitung 10 auf das Potential der Netzleitung L gelegt. Das Potential der Netzleitung L bildet somit den ersten Bezugspunkt 14. In der Steuerleitung 10 befinden sich zur Strombegrenzung ein Netzkondensator 11 und ein Sicherungswiderstand 12 in Serie geschaltet.

Am Versorgungseingang 9 ist zudem entsprechend der Erfindung eine Starterleitung 13 mit überwiegend ohmschem Widerstand angeschlossen, die über die Steuerschaltung 6 ein Gate 5 mit einem zweiten Bezugspunkt 15 verbindet. In diesem Fall liegt der zweite Bezugspunkt 15 zwischen den beiden Wicklungsteilen 2a und 2b der Hilfswicklung und bildet damit zu L einen Potentialunterschied, der geringer ist, als der zwischen L und N.

Über die Starterleitung 13 und die Steuerleitung fließt somit zwischen L und N während des Motorlaufes ein ständiger Strom, der durch einen in der Starterleitung 13 befindlichen Starterwiderstand 16 und eine Starterdiode 17 begrenzt wird. Innerhalb der Starterleitung 13 befinden sich keine Kondensatoren oder Spulen, so daß die Leitung nahezu ausschließlich durch ihren ohmschen Widerstand charakterisiert ist.

## Patentansprüche

1. Elektromotor, insbesondere Asynchronmotor, mit einer Hauptwicklung und mit einer Hilfswicklung, die über Stromschalter (4a, 4b, 4c), insbesondere über TRIAC's, ganz oder teilweise in Serie zur Hauptwicklung schaltbar ist, wobei ein Stromschalter mit seinem Steueranschluß (5) über eine Steuerleitung auf das Potential eines ersten Bezugspunktes gelegt ist,
- wobei eine Starterleitung (13) mit überwiegend ohmschen Widerstand, die den Steueranschluss (5) mit einem zweiten Bezugspunkt (15) verbindet,
- wobei zwischen dem ersten (14) und dem zweiten Bezugspunkt (15) eine Potentialdifferenz besteht,
- wobei zwischen zwei einer Steuerelektronik zugeführten Netzleitungen N und L eine Versorgungsspannung anliegt,
- wobei der erste Bezugspunkt (14) auf dem Potential einer der Netzleitungen N oder L liegt und der zweite Bezugspunkt (15) auf einem Potential liegt, das zu jeder der Netzleitungen N und L einen Potentialunterschied aufweist,
**dadurch gekennzeichnet,**
- **daß** der Potentialunterschied zwischen beiden Bezugspunkten (14,15) durch den Spannungsabfall über einem Teil der Hilfswicklung (2a,2b) hervorgerufen ist.

2. Elektromotor nach einem der vorherigen Ansprüche,
**dadurch gekennzeichnet, daß** in der Starterleitung (13) ein Startwiderstand (16) vorgesehen ist.

3. Elektromotor nach einem der vorherigen Ansprüche,
**dadurch gekennzeichnet, daß** in der Starterleitung (13) eine Startdiode (17) vorgesehen ist.

4. Kreiselpumpe, insbesondere Spalttopfpumpe, angetrieben von einem Elektromotor nach einem der vorherigen Ansprüche.

## Claims

1. Electric motor, in particular asynchronous motor, having a main winding and having an auxiliary winding which can be connected entirely or partially in series with the main winding by means of current switches (4a, 4b, 4c), in particular by means of TRIACs, with a current switch being connected to the potential of a first reference point by way of its gate (5) via a control line,
- with a starter line (13) with a predominantly nonreactive resistance connecting the gate (5) to a second reference point (15),
- with there being a potential difference between the first reference point (14) and the second reference point (15),
- with a supply voltage being applied between two power lines N and L which are supplied to a control electronics system,
- with the first reference point (14) being at the potential of one of the power lines N or L, and the second reference point (15) being at a potential which exhibits a potential difference in relation to each of the power lines N and L,
**characterized**
- **in that** the potential difference between the two reference points (14, 15) is created by the voltage drop across a portion of the auxiliary winding (2a, 2b).

2. Electric motor according to Claim 1,
**characterized in that** a starting resistor (16) is provided in the starter line (13).

3. Electric motor according to either of the preceding claims,
**characterized in that** a starting diode (17) is provided in the starter line (13).

4. Centrifugal pump, in particular split-case pump, driven by an electric motor according to one of the preceding claims.

## Revendications

1. Moteur électrique, notamment moteur asynchrone, comprenant un enroulement principal et un enroulement auxiliaire qui peut être commuté totalement ou partiellement en série avec l'enroulement principal par le biais de commutateurs de courant (4a, 4b, 4c), notamment par le biais de triacs, un commutateur de courant étant appliqué avec sa borne de commande (5) par le biais d'une ligne de commande au potentiel d'un premier point de référence
- une ligne de démarreur (13) ayant une résistance principalement ohmique reliant la borne de commande (5) à un deuxième point de référence (15),
- une différence de potentiel étant présente entre le premier (14) et le deuxième point de référence (15),
- une tension d'alimentation étant appliquée entre deux lignes de réseau L et N acheminées à une électronique de commande,
- le premier point de référence (14) se trouvant au potentiel de l'une des lignes de réseau N ou L et le deuxième point de référence (15) se trouvant à un potentiel qui présente une différence de potentiel par rapport à chacune des lignes de réseau N ou L,
**caractérisé en ce**
- **que** la différence de potentiel entre les deux points de référence (14, 15) est provoquée par la chute de tension sur une partie de l'enroulement auxiliaire (2a, 2b).

2. Moteur électrique selon la revendication 1, **caractérisé en ce qu'**une résistance de démarrage (16) est prévue dans la ligne de démarreur (13).

3. Moteur électrique selon l'une des revendications précédentes, **caractérisé en ce qu'**une diode de démarrage (17) est prévue dans la ligne de démarreur (13).

4. Pompe centrifuge, notamment pompe à pot d'entrefer, entraînée par un moteur électrique selon l'une des revendications précédentes.
